(19)

**Europäisches Patentamt**
**European Patent Office**
**Office européen des brevets**

(11) **EP 4 542 455 B1**

(12) **EUROPEAN PATENT SPECIFICATION**

(45) Date of publication and mention
of the grant of the patent:
**01.07.2026 Bulletin 2026/27**

(21) Application number: **23306839.4**

(22) Date of filing: **19.10.2023**

(51) International Patent Classification (IPC):
***G06N 10/40*** *(2022.01)*

(52) Cooperative Patent Classification (CPC):
**G06N 10/40**

(54) **A QUANTUM SYSTEM COMPRISING A DC VOLTAGE SOURCE FOR STABILIZING A CAT QUBIT**

QUANTENSYSTEM MIT EINER GLEICHSTROMSPANNUNGSQUELLE ZUR STABILISIERUNG
EINES KATZEN-QUBIT

SYSTÈME QUANTIQUE COMPRENANT UNE SOURCE DE TENSION CC POUR STABILISER UN
BIT QUANTIQUE CAT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**23.04.2025 Bulletin 2025/17**

(73) Proprietors:
• **Alice & Bob**
**75015 Paris (FR)**
• **INRIA - Institut National de Recherche en
Informatique et en Automatique
78150 Le Chesnay (FR)**

(72) Inventors:
• **LESCANNE, Raphaël**
**75015 Paris (FR)**
• **JEZOUIN, Sébastien**
**75015 Paris (FR)**
• **PERONNIN, Théau**
**75015 Paris (FR)**
• **MURANI, Anil**
**75015 Paris (FR)**
• **AISSAOUI, Thiziri**
**75015 Paris (FR)**
• **SARLETTE, Alain**
**78150 Le Chesnay (FR)**

(74) Representative: **Atout PI Laplace
Immeuble Up On
25 Boulevard Romain Rolland
CS 40072
75685 Paris Cedex 14 (FR)**

(56) References cited:
• **A. PEUGEOT ET AL: "Generating two continuous
entangled microwave beams using a dc-biased
Josephson junction", ARXIV.ORG, CORNELL
UNIVERSITY LIBRARY, 201 OLIN LIBRARY
CORNELL UNIVERSITY ITHACA, NY 14853, 7
October 2020 (2020-10-07), XP081780691, DOI:
10.48550/arXiv.2010.03376**
• **K. WOOD ET AL: "Josephson photonics with
simultaneous resonances", ARXIV.ORG,
CORNELL UNIVERSITY LIBRARY, 201 OLIN
LIBRARY CORNELL UNIVERSITY ITHACA, NY
14853, 4 October 2021 (2021-10-04),
XP091068411, DOI: 10.48550/arXiv.2106.15243**
• **S.-L. MA ET AL: "Photon-pair blockade in a
Josephson-photonics circuit with two
nondegenerate microwave resonators", NEW
JOURNAL OF PHYSICS, vol. 24, 053001, 3 May
2022 (2022-05-03), XP020422418, DOI: 10.1088/
1367-2630/AC60DF**
• **A. MARQUET ET AL: "Autoparametric resonance
extending the bit-flip time of a cat qubit up to 0.3
s", ARXIV.ORG, CORNELL UNIVERSITY
LIBRARY, 201 OLIN LIBRARY CORNELL
UNIVERSITY ITHACA, NY 14853, 13 July 2023
(2023-07-13), XP091562115, DOI: 10.48550/
arXiv.2307.06761**
• **U. R◆GLADE ET AL: "Quantum control of a cat-
qubit with bit-flip times exceeding ten seconds",
ARXIV.ORG, CORNELL UNIVERSITY LIBRARY,
201 OLIN LIBRARY CORNELL UNIVERSITY
ITHACA, NY 14853, 13 July 2023 (2023-07-13),
XP091562280, DOI: 10.48550/arXiv.2307.06617**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 542 455 B1

- **L. DANNER ET AL: "Injection locking and synchronization in Josephson photonics devices", ARXIV.ORG, CORNELL UNIVERSITY LIBRARY, 201 OLIN LIBRARY CORNELL UNIVERSITY ITHACA, NY 14853, 6 May 2021 (2021-05-06), XP081958580, DOI: 10.48550/ arXiv.2105.02564**

**Description**

The field of the invention relates to stabilizing a cat qubit.

Generally speaking, superconducting qubits can be implemented as two-level systems of superconducting electronic circuits. Such qubits can be stored in bosonic modes and thus form a particular class of superconducting qubits known as bosonic qubits.

It is known from the state of the art that it is possible to stabilize cat qubits, i.e. bosonic qubits defined by a quantum manifold spanned by the superpositions of two coherent states, which are quasi-classical states of the bosonic mode. To this end, a specific dissipative stabilization mechanism may be performed and consists in engineering a non-linear conversion between two photons of a first mode - also known as memory mode or cat qubit mode - that hosts the stabilized quantum manifold and one photon of a second mode - also known as buffer mode - that is strongly dissipative.

The possibility of realizing such a qubit has been demonstrated by R. Lescanne et al. in "Exponential suppression of bit-flips in a qubit encoded in an oscillator" (Nature Physics, 2020). As above-mentioned, the cat qubits rely on a mechanism that dissipates photons in pairs. This process pins down two coherent states to separate locations in phase space. By increasing this separation, an exponential decrease of the bit-flip rate was observed experimentally while only linearly increasing the phase-flip rate. As a result, stabilized cat qubits were demonstrated to benefit from a high noise bias, which means that the bit-flip probability is exponentially smaller than the phase-flip probability. Specifically, this was achieved by using an asymmetrical threaded superconducting quantum interference device ("ATS") as a four-wave mixing non-linear element to engineer the 2-to-1 photon conversion.

Such a 2-to-1 photon conversion is implemented by means of a parametric pump at frequency $|2f_a - f_b|$, where $f_a$ is the resonant frequency of the memory mode and $f_b$ is the resonant frequency of the buffer mode. However, in such a case, the corresponding two-photon coupling rate $g_2$ , which quantifies the strength of the 2-to-1 photon conversion, is proportional to the amplitude $\varepsilon_p$ of the parametric pump. Consequently, the two-photon coupling rate $g_2$ is limited by the amplitude $\varepsilon_p$ of the parametric pump. That is, the Applicant has recognized that the amplitude of the parametric pump used in the prior art to enable four-wave mixing via the non-linear element cannot be arbitrarily increased without introducing parasitic effects associated with the harmonics of this AC pump (i.e. mixing of the pump into higher order non-linear terms may eventually produce undesirable effects).

Peugeot et al; Generating two continuous entangled microwave beams using a dc-biased Josephson junction; arXiv:2010.03376v1; pub. in 2020, discloses experimentally that a dc-biased Josephson junction in series with two microwave resonators emits entangled beams of microwaves leaking out of the resonators.

Wood et al; Josephson photonics with simultaneous resonances; arXiv:2106.15243v2; pub. in 2021, discloses that Cooper pair tunneling across a voltage-biased Josephson junction in series with one or more microwave cavities can generate photons via resonant processes in which the energy lost by the Cooper pair matches that of the photon (s) produced.

Ma et al; Photon-pair blockade in a Josephson-photonics circuit with two nondegenerate microwave resonators; New Journal of Physics, vol. 24, art. 053001; pub. 3 May 2022, discloses how Ma et al; Photon-pair blockade in a Josephson-photonics circuit with two nondegenerate microwave resonators; New Journal of Physics, vol. 24, art. 053001; pub. 3 May 2022.

Marquet et al; Autoparametric resonance extending the bit-flip time of a cat qubit up to 0.3 s; arXiv:2307.06761v1; pub. 13 July 2023, discloses an autoparametric superconducting circuit that couples a mode containing the cat qubit to a lossy mode whose frequency is set at twice that of the cat mode.

The present invention seeks to improve the situation.

To this end, the invention relates to a quantum system for stabilizing a cat qubit comprising:

- a command circuit including a microwave source for delivering microwave radiation and a DC voltage source for delivering DC voltage, and
- a non-linear superconducting quantum circuit including a non-linear element, the non-linear element including at least one Josephson junction, and an assembly comprising at least a first resonant portion having a first mode with a first resonant frequency and a second resonant portion having a second mode with a second resonant frequency, the non-linear element being coupled via a linear coupler to the assembly.

The non-linear superconducting quantum circuit is configured to stabilize a two-dimensional manifold hosting said cat qubit when

• the microwave source is configured to deliver microwave radiation at a frequency substantially equal to the second resonant frequency to the second resonant portion to drive the second mode, and

the DC voltage source is configured to deliver DC voltage to bias the non-linear element, with the delivered DC voltage having a value inducing a microwave oscillation having a frequency substantially equal to an absolute value of a difference between twice the first resonant frequency and the second resonant frequency in the non-linear superconducting quantum circuit.

According to one or more embodiments, the DC voltage source is an ideal DC voltage source.

According to one or more embodiments, the quantum system comprises a resistive element coupled to the DC voltage source, and the command circuit comprises an additional microwave source arranged to deliver to the DC voltage source microwave radiation at a frequency derived from the frequency of the microwave oscillation induced by the DC voltage source to cause injection locking thereof.

The resistive element can be incorporated within the non-linear superconducting quantum circuit. In such a case, the resistive element is "on-chip".

Alternatively, the resistive element can be incorporated within the command circuit. In such a case, the resistive element is "off-chip".

Preferably, the additional microwave source is arranged to deliver microwave radiation at a frequency $f_L$ satisfying the condition $\left| f_{DC} - f_L \right| < \frac{\epsilon_L \nu_0}{4\pi}$, where $f_{DC}$ is the frequency of the microwave oscillation induced by the DC voltage source, $\varepsilon_L$ results from the amplitude and phase of the additional microwave source and $\nu_0 = \frac{2e}{\hbar} I_J R_0$, where $I_J$ is a critical current of the at least one Josephson junction, $R_0$ is the resistance of the resistive element, $\hbar$ is the reduced Planck constant and e is the elementary charge.

According to one or more embodiments, the non-linear element includes only one Josephson junction, and the DC voltage source is arranged to deliver DC voltage having a value $V_{DC}$ verifying $V_{DC} = |2f_a - f_b| \frac{h}{2e}$, where $f_a$ and $f_b$ are respectively the first and second resonant frequencies, h is the Planck constant and e is the elementary charge.

Alternatively, the non-linear element includes a plurality of Josephson junctions, and the DC voltage source is arranged to deliver DC voltage having a value $V_{DC}$ verifying $V_{DC} = N|2f_a - f_b| \frac{h}{2e}$, where $N$ is the number of Josephson junctions of the plurality of Josephson junctions, $f_a$ and $f_b$ are respectively the first and second resonant frequencies, h is the Planck constant and e is the elementary charge.

According to one or more embodiments, the non-linear element is galvanically coupled to the first resonant portion.

Alternatively, the non-linear element is capacitively coupled to the first resonant portion.

According to one or more embodiments, the non-linear element is galvanically coupled to the second resonant portion.

Alternatively, the non-linear element is capacitively coupled to the second resonant portion.

Furthermore, the invention also relates to a method for stabilizing a cat qubit implemented by the quantum system described above and comprising the following operations:

- delivering, by the microwave source, microwave radiation at a frequency substantially equal to the second resonant frequency to the second resonant portion to drive the second mode, and
- delivering, by the DC voltage source, DC voltage to bias the non-linear element, with the delivered DC voltage having a value inducing a microwave oscillation having a frequency substantially equal to the absolute value of the difference between twice the first resonant frequency and the second resonant frequency in the non-linear superconducting quantum circuit.

Other features and advantages of the invention will become apparent from the following description provided for indicative and non-limiting purposes, with reference to the accompanying drawings, wherein:

- Figure 1 illustrates a prior art quantum system for stabilizing a cat qubit by implementing a parametric dissipative stabilization,

- Figure 2 schematically illustrates a quantum system according to the invention,

- Figure 3 illustrates an explicit diagram of the quantum system of figure 2,

- Figure 4 illustrates a partial electrical equivalent diagram of a galvanic example implementation of the quantum system of figure 3,

- Figure 5 illustrates a partial electrical equivalent diagram of a capacitive example implementation of the quantum system of figure 3,

- Figure 6 illustrates a circuit including a DC voltage source applied across a Josephson junction,

- Figure 7 illustrates a variant of the galvanic example implementation of figure 4 in which the non-linear element includes three Josephson junctions,

- Figure 8 illustrates a theoretical comparison of the time evolution of photon dissipation for the prior art quantum system of figure 1 and the quantum system according to the present invention,

- Figure 9 illustrates a variant of the galvanic example implementation of figure 4 in which a microwave source and a resistive element are provided for implementing injection locking,

  - Figure 10 illustrates the influence of the amplitude of the injection locking pump on the stabilization of the frequency of the Josephson junction,
  - Figure 11 illustrates how injection locking contributes to the stabilization of the phase of the cat qubit, and
  - Figure 12 illustrates an experimental circuit for realizing the quantum system according to the invention with injection locking.

The drawings and the following description are comprised for the most part of positive and well-defined features. As a result, they are not only useful in understanding the invention, but they can also be used to contribute to its definition, should the need arise.

A. Cat qubits

So far, the Applicant's work has been generally concerned with the stabilization of cat qubits. As previously explained, R. Lescanne et *al.* (2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $\left|C_\alpha^\pm\right\rangle$ which are superpositions of two coherent states $|\alpha\rangle$ and $|-\alpha\rangle$:

$$\left|C_\alpha^\pm\right\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

B. Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction or an ATS - to the cat qubit mode a and by engineering the Hamiltonian $H/\hbar = g_2(a^2 - \alpha^2)b^\dagger + \mathrm{h.\,c.}$, where $b$ is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \mathrm{h.\,c.}$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \sinh(r)e^{i\theta}a^\dagger)^2 - \alpha^2\right)$, where $\kappa_{SC}$ is the squeezed two-photon dissipation rate, $a$ is the photon annihilation operator, $\alpha$ is a complex number defining the cat qubit, $r$ and $\theta$ are the modulus and argument of the complex squeezing parameter $\xi = re^{i\theta}$ This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $H/\hbar = g_{SC}\left((\cosh(r)a + \sinh(r)e^{i\theta}a^\dagger)^2 - \alpha^2\right)b^\dagger + \mathrm{h.\,c.}$, where $b$ is the photon annihilation operator of mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/\hbar = g_2(a^2 + \lambda a^\dagger a - \alpha^2)b^\dagger + \mathrm{h.\,c.}$, where $g_2$ is the amplitude of a pump at frequency $|2f_a - f_b|$, $a$ is the annihilation operator of the cat qubit mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and $b$ is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda$ = 2tanh $(r)$.

g) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/\hbar = g_2(a^2 - \alpha^2)b^\dagger + \text{h. c.}$, where $b$ is the photon annihilation operator of the buffer mode b provided the mode frequencies verify substantially $2f_a = f_b$ and $g_2 < \kappa_b$ to which a drive of the buffer mode at frequency $f_b$ is added.

The present invention aims to implement stabilization in the spirit of parametric dissipative stabilization according to scheme a) or d).

The parametric dissipative stabilization relies on generating the following terms:

- $a^2b^\dagger + \text{h. c.}$ : this first term corresponds to the non-linear conversion between two photons of a first mode a - the memory - and one photon of a second mode b - the buffer. This term requires a pump at a frequency $|2f_a - f_b|$, where $f_a$ is the resonant frequency of the first mode a and $f_b$ is the resonant frequency of the second mode b. Such a pump is thus a two-photon pump.

- $\alpha^2b^\dagger + \text{h. c.}$: this second term requires the drive of the second mode b at a frequency $f_b$. Such a drive, referred to as buffer drive, combined with the previous conversion terms effectively becomes a two-photon drive.

For this purpose, it is known to the skilled person that the first mode a and the second mode b can be coupled via an ATS, and to generate the first term using a microwave source arranged to deliver radiation at a frequency substantially equal frequency to $|2f_a - f_b|$ to parametrically drive the ATS.

However, as detailed below, such an implementation of the 2-to-1 photon conversion has the disadvantage that the two-photon coupling rate $g_2$ is proportional to the amplitude $\varepsilon_p$ of the microwave source - or two-photon pump. Consequently, the constraints on the amplitude $\varepsilon_p$ limit the value of the two-photon coupling rate $g_2$ accordingly, i.e. the amplitude $\varepsilon_p$ cannot be arbitrarily increased - for increasing the strength of the 2-to-1 photon conversion - without introducing parasitic effects associated with the harmonics of this AC parametric drive (i.e. mixing of the AC drive into higher order non-linear terms may eventually produce undesirable effects).

The present invention presents an alternative to the use of a microwave source to carry out the 2-to-1 photon conversion in order to obtain a higher two-photon coupling rate $q_2$.

C. Prior art quantum system for implementing parametric dissipative stabilization

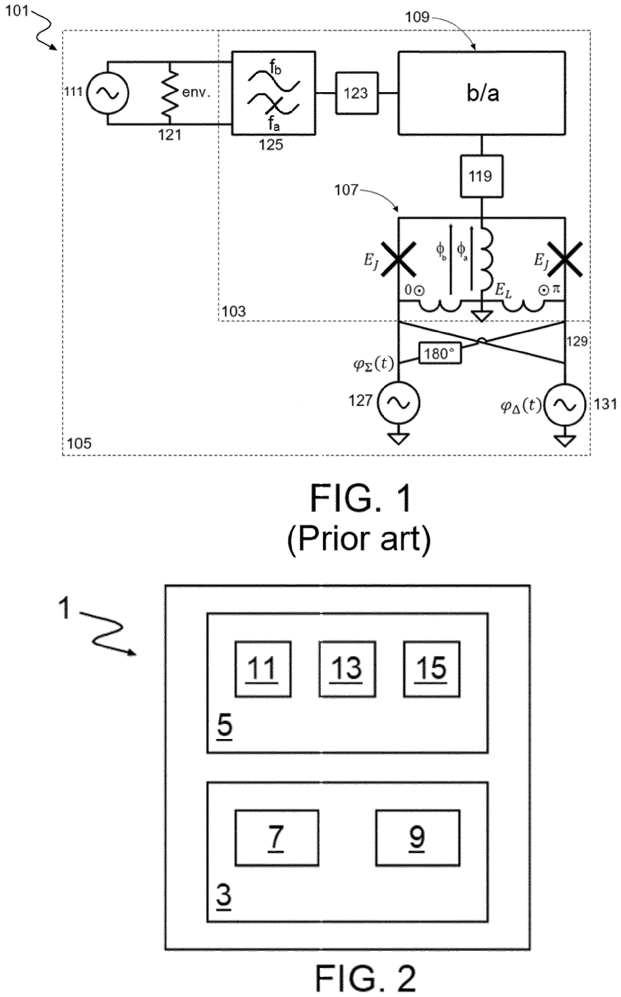

Figure 1 illustrates a prior art quantum system 101 for implementing a parametric dissipative stabilization.

The quantum system 101 comprises a non-linear superconducting quantum circuit 103 and a command circuit 105.

The non-linear superconducting quantum circuit 103 is arranged to make possible four-wave mixing between the first mode a and the second mode b.

The non-linear superconducting quantum circuit 103 is intended to be subject to microwave radiations delivered by the command circuit 105 in order to engineer various non-linear interactions between the first mode a and the second mode b. The frequency of each microwave radiation is tuned to select specific terms within the rotating-wave approximation.

The non-linear superconducting quantum circuit 103 comprises a non-linear element 107 and at least one resonant portion 109.

The non-linear element 107 is arranged to engineer the first term $a^2b^\dagger + \text{h. c.}$ of the jump operator $L_2$ for stabilizing the cat qubit.

The non-linear element 107 is an ATS. It is known to the skilled person that an ATS can be used to engineer the 2-to-1 photon conversion, i.e. the first term $a^2b^\dagger$ of the jump operator $L_2$, in order to perform a parametric dissipative stabilization, as successfully shown by R. Lescanne *et al.* (2020). More particularly, such a 2-to-1 photon conversion between the first mode a and the second mode b is obtained by parametrically pumping the ATS at the frequency $f_p = |2f_a - f_b|$. Advantageously, the pump frequency satisfies $f_p \gg g_2$ to make this parametric pumping work as well as possible.

Contrary to the first implementations of this stabilization scheme proposed by Z. Leghtas *et al.* (2015) and S. Touzard *et al.* (2018) in which the superconducting circuit element used as a four-wave mixer was a transmon with a single Josephson junction, the solution developed by R. Lescanne *et al.* (2020) exploits the ATS design which has much lower cross-Kerr terms than the transmon and thus allowed to observe the exponential suppression of bit-flips.

It is known to the skilled person that, when biased at its flux working point (0 - $\pi$ or conversely), the Hamiltonian $H_{ATS}$ of the ATS 107 has the following "sin-sin" form:

$$H_{ATS} = -2E_J \sin\big(\varphi_\Sigma(t)\big)\sin(\varphi) + \frac{E_L}{2}\big(\varphi - \varphi_\Delta(t)\big)^2$$

where $\varphi = \varphi_a(a + a^\dagger) + \varphi_b(b + b^\dagger)$ is the total superconducting phase difference across the ATS 107, $\varphi_a$ is the zero-point fluctuation of the phase of the first mode a across the ATS 107 and $\varphi_b$ is the zero-point fluctuation of the phase of the second mode b across the ATS 107, $E_J$ is the Josephson energy of the side junctions and $E_L$ is the inductive energy of a central inductance, $\varphi_\Sigma(t)$ corresponds to a common flux modulation of the two loops of the ATS 107 and $\varphi_\Delta(t)$ corresponds to a differential flux modulation of the two loops of the ATS 107. The former can be implemented by delivering microwave radiations through flux lines of the ATS 107 out of phase, the latter can be implemented by delivering microwave radiations through flux lines of the ATS 107 in phase.

Parametric pumping of the ATS 107 is typically done by pumping the common flux as pumping the differential flux merely displaces the modes coupled to the ATS 107. As an example, by pumping the common flux at the frequency $f_p = |2f_a - f_b|$, $\varphi_\Sigma(t) = \varepsilon_p \cos(2\pi f_p t)$, the non-linear resonant part of the Hamiltonian writes in the rotating frame:

$$H_{ATS} = \frac{E_J \epsilon_p \varphi_a^2 \varphi_b}{2}\big(a^2 b^\dagger + \mathrm{h.c.}\big)$$

which is typically the two-to-one photon exchange Hamiltonian needed to engineer the two-photon stabilization.

The resonant portion 109 is arranged to be connected to the ATS 107 to provide the non-linear superconducting quantum circuit 103 with the first mode a and the second mode b having respective resonant frequencies $f_a$ and $f_b$. The participation of the first mode a in the ATS 107 is quantified by the zero-point fluctuation $\varphi_a$, while the participation of the second mode b in the ATS 107 is quantified by the zero-point fluctuation $\varphi_b$.

The resonant portion 109 is a linear microwave network b/a. Such a linear microwave network b/a is such that, when coupled via a linear coupler 119 to the ATS 107 which acts as an inductive element, the non-linear superconducting quantum circuit 103 has the first mode a and the second mode b at respective resonant frequencies $f_a$ and $f_b$ which participate in the ATS 107.

The command circuit 105 is arranged to deliver microwave radiations. To this end, as illustrated in figure 1, the command circuit 105 comprises at least a microwave source 111 and a microwave source 127.

The microwave source 127 is set-up to modulate the common flux in the ATS 107. More particularly, the microwave source 127 is arranged to deliver microwave radiations through flux lines of the ATS 107 out of phase to implement the common flux modulation $\varphi_\Sigma(t)$.

For this purpose, a microwave network 129 is used to split the radiation emitted by the microwave source 127 and apply it to each node of the ATS 107 with the correct phase.

Alternatively, two different microwave sources could be used, each being simply coupled to a single node of the ATS 107 and their relative phase and amplitude being set so as to achieve the desired flux modulation.

When the microwave source 127 is set at the frequency $|2f_a - f_b|$, the non-linear superconducting quantum circuit 103 performs the 2-to-1 photon conversion between the first mode a and the second mode b. To convert this 2-to-1 photon conversion into two-photon dissipation, the second mode b is selectively coupled to a load 121 via a linear coupler 123 and a microwave filter 125 configured as a band pass filter with a frequency $f_b$.

Alternatively, the microwave filter 125 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 121.

Alternatively, it may be configured as a low-pass (respectively high-pass) filter if $f_a > f_b$ (resp $f_b > f_a$). In other embodiments, the microwave filter 125 can be omitted when coupling between the load 121 and substantially only the second mode b can be established. The skilled person thus understands that the first mode a has a high-quality factor while the second mode b has a low-quality factor.

The microwave source 111 is arranged to drive the second mode b in order to engineer the second term $a^2 b^\dagger + \mathrm{h.c.}$ of the jump operator $L_2$ for stabilizing the cat qubit. As previously explained, the microwave source 111 is thus arranged to deliver microwave radiation at a frequency substantially equal to $f_b$ to the linear microwave network b/a.

In the above, the load 121 can be seen as part of the command circuit 105 of figure 1, while the linear coupler 123 and the microwave filter 125 can be seen as part of the non-linear superconducting quantum circuit 103.

Finally, in figure 1, the command circuit 105 further comprises a microwave source 131 set-up to modulate the differential flux in the ATS 107 through the microwave network 129. More particularly, the microwave source 131 is arranged to deliver microwave radiations through flux lines of the ATS 107 in phase to implement the differential flux

modulation $\varphi_\Delta(t)$.

It is to be noted that the microwave network 129 is used for convenience but can be omitted and the microwave source 131 could be applied directly to both nodes of the ATS 107, their relative phase and amplitude being set so as to achieve the desired flux modulation.

For the sake of completeness, it may also be noted that the microwave source 131 can be used, instead of the microwave source 111, to deliver microwave radiation at a frequency $f_b$ to the linear microwave network b/a to drive the second mode b.

### C.1. Two-photon coupling rate limitation

As above-mentioned, the parametric dissipative stabilization implemented using an ATS as well as a two-photon pump at a frequency $|2f_a - f_b|$ to parametrically pump the ATS results in a two-photon coupling rate $g_2$ which is proportional to the amplitude $\varepsilon_p$ of the microwave source used as two-photon pump.

Referring again to figure 1, the microwave source 111 delivers microwave radiation at a frequency $f_d$ substantially equal to $f_b$ to drive the second mode b. Such a buffer drive can be expressed as follows:

$$\epsilon_d(t) = \epsilon_d \cos(\omega_d t)$$

where: $\varepsilon_d$ is the amplitude of the buffer drive and $\omega_d$ is the angular frequency of the buffer drive such as $\omega_d = 2\pi f_d$.

The microwave source 127 delivers microwave radiation at a frequency $f_p$ substantially equal to $|2f_a - f_b|$ to parametrically drive the ATS 107. Such a two-photon pump can be expressed as follows:

$$\epsilon_p(t) = \epsilon_p \cos(\omega_p t)$$

where: $\varepsilon_p$ is the amplitude of the two-photon pump and $\omega_p$ is the angular frequency of the two-photon pump such as $\omega_p = 2\pi f_p$.

The "sin-sin" form of the Hamiltonian $H_{ATS}$ of the ATS 107 can be written as follows:

$$H_{ATS} = \hbar\omega_a a^\dagger a + \hbar\omega_b b^\dagger b$$
$$- 2E_J \sin\left(\epsilon_p(t)\right)\sin(\varphi_a(a + a^\dagger) + \varphi_b(b + b^\dagger)) + \epsilon_d(t)(b + b^\dagger)$$

where: $\hbar$ is the reduced Planck constant.

In order to avoid strong pump effect, the two-photon pump is carried out such that the amplitude $\varepsilon_p$ is very small compared to 1: $\varepsilon_p \ll 1$. Consequently, it is possible to neglect the higher order terms in the sine expansion:

$$H_{ATS} = \hbar\omega_a a^\dagger a + \hbar\omega_b b^\dagger b - 4E_J J_1(\epsilon_p)\cos(\omega_p t)\sin(\varphi_a(a + a^\dagger) + \varphi_b(b + b^\dagger))$$
$$+ \epsilon_d(t)(b + b^\dagger)$$

with:

$$J_1(\epsilon_p) \approx \frac{\epsilon_p}{2}$$

The Hamiltonian $H_{ATS}$ can be written as follows within the rotating-wave approximation:

$$H_{ATS}^{RWA}\Big/_\hbar = g_2^* a^2 b^\dagger + \text{h.c.}$$

Consequently:

$$g_2 = E_J J_1(\epsilon_p)\varphi_a{}^2\varphi_b$$

Consequently, in the limit of small pump amplitude, the two-photon coupling rate $g_2$ is proportional to the amplitude $\varepsilon_p$ of the two-photon pump:

$$g_2 = \frac{E_J}{2}\epsilon_p\varphi_a{}^2\varphi_b$$

Due to this linear dependence, the two-photon exchange interaction is determined by the amplitude $\varepsilon_p$ of the two-photon pump.

A known solution to avoid such a limitation is to implement a resonant dissipative stabilization which corresponds to the previous stabilization scheme g).

The resonant dissipative stabilization corresponds to the particular case where $2f_a = f_b$, and therefore where the 2-to-1 photon conversion is not activated by parametric pumping. Consequently, only the drive of the second mode b at a frequency $f_b$ is necessary to engineer the jump operator $L_2$.

The resonant case, where $f_p = 0$, may be particularly advantageous, as developed in the European patent application EP 21306965.1 filed by the Applicant. In such a resonant case, a three-wave mixing non-linear element should be used instead of a four-wave mixing non-linear element.

On the other hand, one benefit of the above-detailed four-wave mixing non-linear element is that the two-to-one photon exchange can be easily switched off, which may be beneficial for particular operations such as a CNOT gate. Moreover, such a four-wave mixing non-linear element makes it possible to avoid the spurious cross-Kerr terms and the related additional noise which caused recurring issues in the very first implementations, i.e. Z. Leghtas *et al.* (2015) and S. Touzard *et al.* (2018), of the above-detailed stabilization scheme due to the presence of a transmon.

The Applicant has therefore recognized that it may be advantageous to use an alternative four-wave mixing mechanism which does not rely on a two-photon AC pump, and thus may thereby avoid parasitic effects associated with harmonics of the two-photon AC pump, whilst still remaining easy to switch off.

The Applicant thus proposes the quantum system 1 schematically illustrated in figure 2. A detailed architecture of the quantum system 1 and its advantages compared to parametric dissipative stabilization are developed below.

D. Proposed quantum system for stabilizing cat qubits

Figure 2 illustrates a quantum system 1 comprising a non-linear superconducting quantum circuit 3 and a command circuit 5.

The non-linear superconducting quantum circuit 3 is arranged to make possible four-wave mixing between a first mode a and a second mode b. In the following, the first mode a is used as a memory hosting a cat qubit, while the second mode b is used as a buffer in between the cat qubit and the external environment.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The first mode a has a high-quality factor $Q_a$ while the second mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

In the context of the invention, the second mode b is more dissipative than the first mode a. In particular, the first mode a has a high-quality factor $Q_a$ while the second mode b has a low-quality factor $Q_b$. A high-quality factor $Q_a$ means that the rate at which photons are lost from the first mode a directly to the environment is much lower - typically $10^6$ times lower - than the resonant frequency $f_a$. Furthermore, for the purpose of stabilizing a cat qubit, the energy leak rate $\kappa_b$ of the second mode b defined as $\kappa_b = \frac{\omega_b}{Q_b}$ is large compared to the two-photon coupling rate $g_2$ while the energy leak rate

$\kappa_a$ of the first mode a defined as $\kappa_a = \omega_a / Q_a$ is as small as possible. Typically, the respective orders of magnitude of the energy leak rates $\kappa_a$ and $\kappa_b$ satisfy the following inequality:

$$\kappa_a \ll \frac{4g_2{}^2}{\kappa_b}$$

In practice, the Applicant has observed that the energy leak rate $\kappa_a$ of the first mode a is preferably five times smaller than the quantity $\frac{4g_2{}^2}{\kappa_b}$, i.e.: $\kappa_a < \frac{4g_2{}^2}{5\kappa_b}$.

The invention thus falls within a different framework than implementations such as, for instance, the design of a bright source of entangled microwaves. Indeed, such an implementation requires, *inter alia,* that the respective energy leak rates $\kappa_a$ and $\kappa_b$ of the first mode a and the first mode b be similar, as well as the respective quality factors $Q_a$ et $Q_b$ of the first mode a and the first mode b, or even that the quality factor $Q_b$ of the second mode b is greater than the quality factor $Q_a$ of the first mode a. Conversely, here, the quality factor $Q_a$ of the first mode a is significantly greater than the quality factor $Q_b$ of mode b.

The ratio of the quality factor of the first mode a to the second mode b ($Q_a/Q_b$) may be greater than 100. Preferably the ratio $Q_a/Q_b$ is greater than 1000, more preferably greater than 10,000.

The non-linear superconducting quantum circuit 3 is intended to be subject to microwave radiation and DC voltage both delivered by the command circuit 5 in order to engineer various non-linear interactions between the first mode a and the second mode b.

The non-linear superconducting quantum circuit 3 comprises a non-linear element 7 and an assembly 9 of two or more resonant portions. In the following and for the sake of conciseness, the assembly 9 includes two resonant portions : a first resonant portion and a second resonant portion ; even if the assembly 9 can include more than two resonant portions.

The non-linear element 7 is arranged to engineer a Hamiltonian $H_{DC}$ for stabilizing a cat qubit. The expression of such a Hamiltonian $H_{DC}$ will be detailed hereinafter.

In the context of the present invention, the non-linear element 7 only includes one or more Josephson junctions to generate the parametric frequency $|2f_a - f_b|$ via a DC bias, rather than, e.g., an ATS driven by a parametric pump.

The assembly 9 of two resonant portions is arranged to be coupled or connected to the non-linear element 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the one or more Josephson junctions, noted $\varphi_a$ for the first mode a and $\varphi_b$ for the second mode b. The first mode a and the second mode b correspond to electromagnetic modes, i.e. a cat qubit mode and a buffer mode respectively.

The command circuit 5 is arranged to deliver microwave radiations and DC voltage to cause the non-linear element 7 to engineer the Hamiltonian $H_{DC}$ for stabilizing the cat qubit.

To this end, and as illustrated in figure 2, the command circuit comprises a first microwave source 11, a DC voltage source 13 and a second microwave source 15.

The first microwave source 11 is arranged to drive the second mode b by delivering microwave radiation at a frequency substantially equal to the second resonant frequency $f_b$ to the assembly 9 of two resonant portions. Such a drive corresponds to the so-called buffer drive.

The DC voltage source 13, which therefore replaces here the microwave source usually used to implement the non-linear conversion between two photons of the first mode a and one photon of the second mode b, is arranged to bias the non-linear element 7 with the delivered DC voltage having a value inducing a microwave oscillation having a frequency substantially equal to $|2f_a - f_b|$ in the non-linear superconducting quantum circuit 3.

Finally, the second - or additional - microwave source 15 is arranged to deliver microwave radiation at a frequency substantially equal to the frequency of the microwave oscillation induced by the DC voltage source 13 to cause injection locking thereof. As explained below, such an injection locking is particularly useful when the DC voltage source 13 is not an ideal DC voltage source, i.e. when the DC voltage source 13 induces voltage noise.

E. Example implementations of the proposed quantum systems

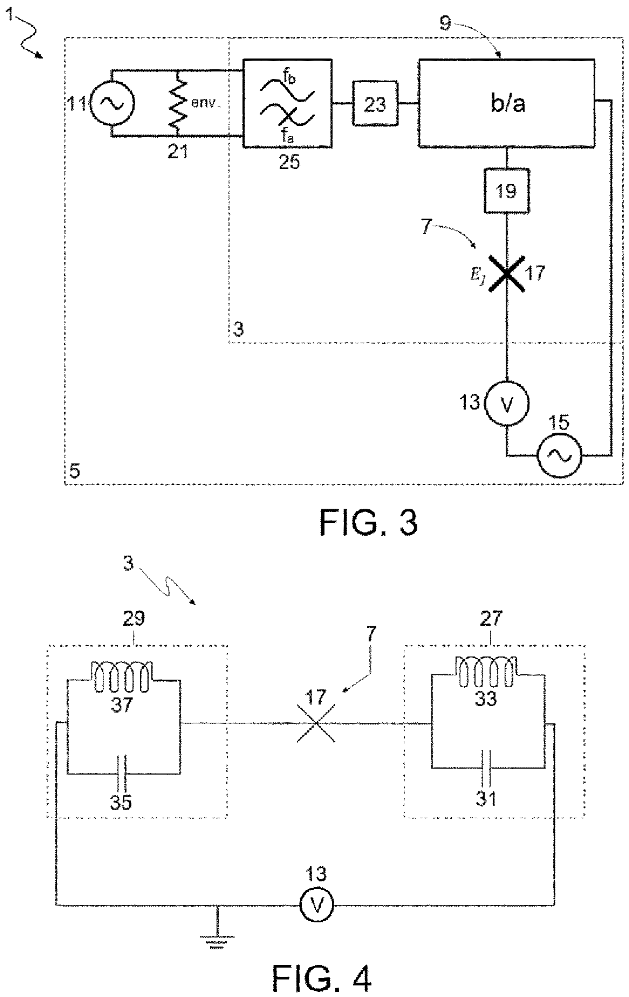

Figure 3 shows a detailed architecture of the quantum system 1 for implementing a dissipative stabilization.

The non-linear element 7 is a set of one or more Josephson junctions to which the assembly 9 of two resonant portions, which is a linear microwave network b/a, is connected. In the example described here, the non-linear element 7

includes only one Josephson junction 17.

The linear microwave network b/a can be compared to that of the prior art quantum system 101 illustrated in figure 1 and is such that, when coupled via a linear coupler 19 to the non-linear element 7, the non-linear superconducting quantum circuit 3 has the first mode a and the second mode b at respective resonant frequencies $f_a$ and $f_b$ which participate in the non-linear element 7.

Similarly to the prior art quantum system 101, the microwave source 11 - that can be compared to the microwave source 111 - is arranged to drive the second mode b at the second resonant frequency $f_b$.

More particularly, the second mode b is selectively coupled to a load 21 via a linear coupler 23 and a microwave filter 25 configured as a band pass filter with a frequency $f_b$.

Again, the microwave filter 25 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 21.

It may also be configured as a low-pass (respectively high-pass) filter if $f_a > f_b$ (resp $f_b > f_a$). In other embodiments, the microwave filter 25 can be omitted when coupling between the load 21 and substantially only the second mode b can be established. The skilled person thus understands that the first mode a has a high-quality factor while the second mode b has a low-quality factor.

The skilled person understands that the linear coupler 19, the load 21, the linear coupler 23 and the microwave filter 25 of the quantum system 1 can be compared respectively to the linear coupler 119, the load 121, the linear coupler 123 and the microwave filter 125 of the prior art quantum system 101.

The command circuit 5 does not comprise anything functionally comparable to the microwave source 127, the microwave network 129 or the microwave source 131. Instead, the command circuit 5 comprises the DC voltage source 13 and the microwave source 15 to perform the 2-to-1 photon conversion; such a 2-to-1 photon conversion being converted into a two-photon drive with the drive of the second mode b at frequency $f_b$ performed using the microwave source 11, and into a two-photon dissipation with the load 21.

### E.1. Galvanic cat qubits

Figure 4 illustrates an electrical equivalent diagram of an embodiment of the quantum system 1 of figure 3 which takes the form of a galvanic circuit.

Such an electrical equivalent diagram is partial since it only represents the non-linear element 7 and the linear microwave network b/a, and thus represent neither the linear coupler 19 nor the microwave filter 25.

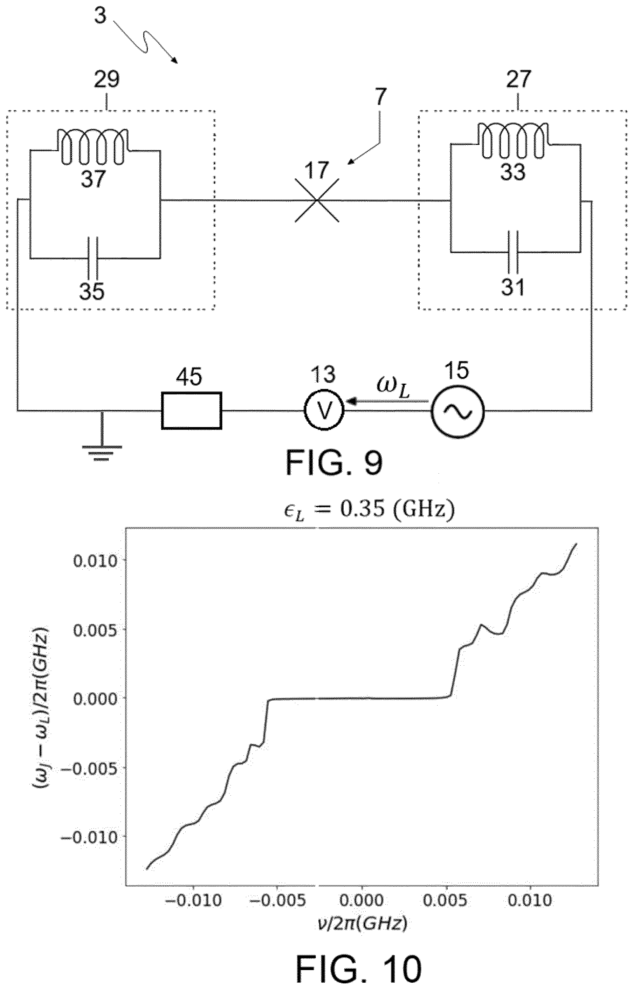

It should also be noted that the injection locking is ignored here, and therefore that the microwave source 15 is not taken into account. Injection locking, as well as the means to implement it, will only be mentioned and discussed in detail below, in part E.4 and with reference to figure 9.

As in figure 3, the non-linear element 7 comprises only one Josephson junction 17.

The linear microwave network b/a includes a first resonant portion 27 and a second resonant portion 29.

Both the first resonant portion 27 and the second resonant portion 29 are galvanically coupled to the Josephson junction 17. The first resonant portion 27 confers the first mode a having the resonant frequency $f_a$ to the non-linear superconducting quantum circuit 3 while the second resonant portion 29 confers the second mode b having the resonant frequency $f_b$ to the non-linear superconducting quantum circuit 3.

By "galvanically coupled", it should be understood here that there are short electrically conducting portions which connect the first resonant portion 27 and the second resonant portion 29 to the Josephson junction 17, i.e., a short electrically conducting track or any other mean ensuring a physically continuous conducting junction. The expression "short" means that the electrically conducting track has an impedance which is negligeable compared to the impedance of the Josephson junction 17, the first resonant portion 27 and the second resonant portion 29 at the resonant frequencies $f_a$ and $f_b$. These short electrically conducting portions correspond to the linear coupler 19 of figure 3.

In the embodiment of figure 4, the first resonant portion 27 includes a capacitive element 31 and an inductive element 33 which are connected in parallel. Similarly, the second resonant portion 29 includes a capacitive element 35 and an inductive element 37 which are connected in parallel.

### E.2. Capacitive cat qubits

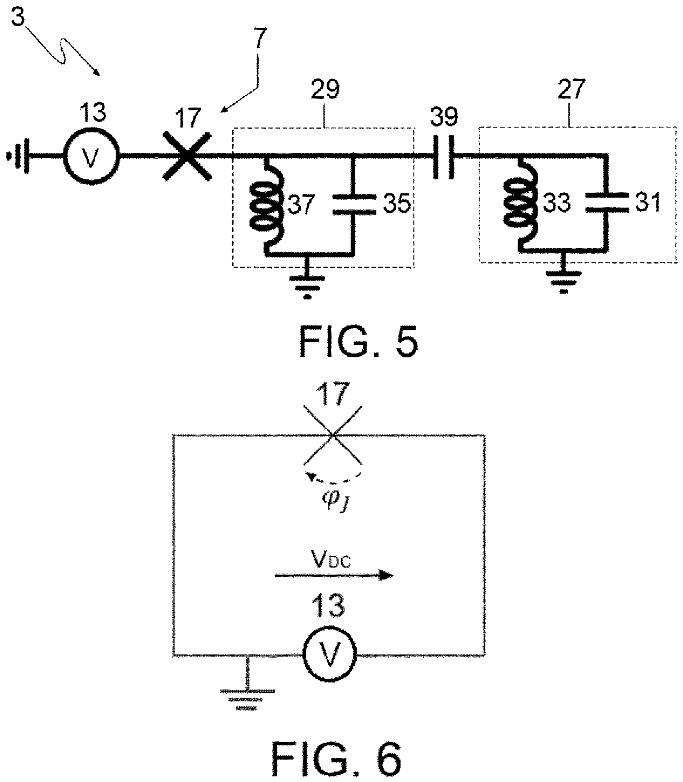

Figure 5 illustrates an electrical equivalent diagram of an embodiment of the quantum system 1 of figure 3 which takes the form of a capacitive circuit.

Similarly to figure 4, such an electrical equivalent diagram is partial and only represents the non-linear element 7 - which comprises only one Josephson junction 17 - and the linear microwave network b/a.

Once again, the injection locking is ignored here, and the microwave source 15 is not taken into account. As a reminder, injection locking, as well as the means to implement it, will only be mentioned and discussed in detail below, in part E.4 and with reference to figure 9.

The linear microwave network b/a also includes a first resonant portion 27 and a second resonant portion 29. For the sake of simplification, the same reference signs are used; the first resonant portion 27 still confers the first mode a having the resonant frequency $f_a$ to the non-linear superconducting quantum circuit 3, while the second resonant portion 29 confers the second mode b having the resonant frequency $f_b$ to the non-linear superconducting quantum circuit 3.

In figure 5, the first resonant portion 27 still includes a capacitive element 31 and an inductive element 33 while the second resonant portion 29 still includes a capacitive element 35 and an inductive element 37.

It must be noted that the first resonant portion 27 is strongly capacitively coupled to the Josephson junction 17 through a capacitive element 39, whereas the second resonant portion 29 is galvanically coupled to the Josephson junction 17. The capacitive element 39 and the short electrically conducting portion connecting respectively the first resonant portion 27 and the second resonant portion 29 to the Josephson junction 17 correspond to the linear coupler 19 of figure 3.

It must also be noted that the second resonant portion 29 can also be capacitively coupled to the Josephson junction 17, whether the first resonant portion 27 and the Josephson junction 17 are galvanically or capacitively coupled.

### E.3. DC cat qubit stabilization

As detailed above, the DC voltage source 13 is used to perform the 2-to-1 photon conversion. More particularly, as illustrated in figures 3, 4 and 5, the DC voltage source 13 delivers DC voltage to bias the non-linear element 7 which takes the form of a single Josephson junction 17.

Figure 6 shows a simplified circuit in which a DC voltage source and a Josephson junction are connected in series. In this figure, the first resonant portion 27 and the second resonant portion 29 which respectively host the first mode a and the second mode b are absent from this circuit in order to only illustrate the interaction between a DC voltage source and a Josephson junction. For the sake of consistency with the rest of the description, the DC voltage source is denoted 13 while the Josephson junction is denoted 17.

The DC voltage source 13 delivers a constant voltage $V_{DC}$ across the Josephson junction 17. Furthermore, the phase of the Josephson junction 17 is denoted $\varphi_J$.

At this stage, for simplicity, we can consider that the DC voltage source 13 is ideal. By "ideal", it is meant here that the operation of the DC voltage source 13 does not generate voltage noise. An ideal DC voltage source can itself be made with a Josephson junction.

The Cooper pairs - also known as BCS pairs (Bardeen-Cooper-Schrieffer pairs) -, which are pairs of electrons bound together at low temperatures, travel the circuit with an energy equal to $2eV_{DC}$, where e is the elementary charge.

In the microwave environment set up by the Josephson junction 17, such an energy $2eV_{DC}$ is converted into photons with an angular frequency $\omega_{DC}$ equal to $2eV_{DC}/\hbar$. It can thus be considered that the Josephson junction 17 acts as a "voltage-to-frequency converter".

Consequently, the circuit of figure 6 can be described with the following differential equation:

$$\dot{\varphi}_J = \frac{2e}{\hbar}V_{DC} = \omega_{DC}$$

Since the DC voltage $V_{DC}$ is constant over the time, the time evolution of the phase $\varphi_J$ can be expressed as follows:

$$\varphi_J(t) = \omega_{DC}t + \varphi_{J_0}$$

where: $\varphi_{J_0}$ is the initial value of the phase $\varphi_J$, $\varphi_{J_0} = \varphi_J(0)$.

The phase $\varphi_J$ thus varies linearly with time.

Nonetheless, the non-linear superconducting quantum circuit 3 of the quantum system 1 further comprises the first resonant portion 27 and the second resonant portion 29, and more particularly the first mode a and the second mode b, in addition to the Josephson junction 17. In the following, the zero-point phase fluctuation of the first mode a is denoted $\varphi_a$ while the zero-point phase fluctuation of the second mode b is denoted $\varphi_b$.

As previously explained, the DC voltage source 13 is arranged to deliver DC voltage to bias the Josephson junction 17. The value $V_{DC}$ of the DC voltage induces a microwave oscillation having an angular frequency $\omega_{DC}$ such that

$\omega_{DC} = \frac{2e}{\hbar} V_{DC}$ . Yet, since the DC voltage source 13 is intended to perform the 2-to-1 photon conversion which is usually obtained with parametric pumping at a frequency $|2f_a - f_b|$, the value $V_{DC}$ must be set such that the frequency $f_{DC}$ is equal to $|2f_a - f_b|$.

Therefore:

$$f_{DC} = {\omega_{DC}}\big/{2\pi} = \frac{1}{2\pi} \frac{2e}{\hbar} V_{DC}$$

Then, since the reduced Planck constant $\hbar$ is defined as $\hbar = \frac{h}{2\pi}$:

$$f_{DC} = \frac{2e}{h} V_{DC} = |2f_a - f_b|$$

Then:

$$V_{DC} = |2f_a - f_b| \frac{h}{2e}$$

Moreover, the differential equation of the phase $\varphi_J$ of the Josephson junction 17 must now be expressed as follows:

$$\dot{\varphi}_J = \frac{2e}{\hbar} V_{DC} + \dot{\varphi}_a + \dot{\varphi}_b$$

The Hamiltonian $H_{DC}$ engineered by the non-linear superconducting quantum circuit 3, and more particularly by the Josephson junction 17, is expressed as follows:

$$H_{DC} = \hbar\omega_a a^\dagger a + \hbar\omega_b b^\dagger b - E_J \cos(\varphi_J) + \epsilon_d(t)(b + b^\dagger)$$

Then:

$$H_{DC} = \hbar\omega_a a^\dagger a + \hbar\omega_b b^\dagger b - E_J \cos(\omega_{DC}t + \varphi_a(a + a^\dagger) + \varphi_b(b + b^\dagger)) + \epsilon_d(t)(b + b^\dagger)$$

Then:

$$H_{DC} = \hbar\omega_a a^\dagger a + \hbar\omega_b b^\dagger b - E_J \cos(\omega_{DC}t) \cos(\varphi_a(a + a^\dagger) + \varphi_b(b + b^\dagger))$$
$$+ E_J \sin(\omega_{DC}t) \sin(\varphi_a(a + a^\dagger) + \varphi_b(b + b^\dagger)) + \epsilon_d(t)(b + b^\dagger)$$

As previously mentioned, the Hamiltonian $H_{DC}$ can be written as follows within the rotating-wave approximation:

$$H_{DC}^{RWA}\big/{\hbar} = g_2^* a^2 b^\dagger + \text{h.c.}$$

Consequently:

$$g_2 = \frac{E_J}{4} \varphi_a^2 \varphi_b$$

It thus appears that the two-photon rate $g_2$ is not determined - and thus limited - by the amplitude of any parametric pump.

It must be added that the DC voltage delivered by the DC voltage source 13 leads to a linear increase in the phase across the Josephson junction 17 which averages the Kerr and cross-Kerr terms to zero.

In the examples described so far, the non-linear element 7 is formed by a single Josephson junction 17. However, the non-linear element 7 may also include a plurality of Josephson junctions.

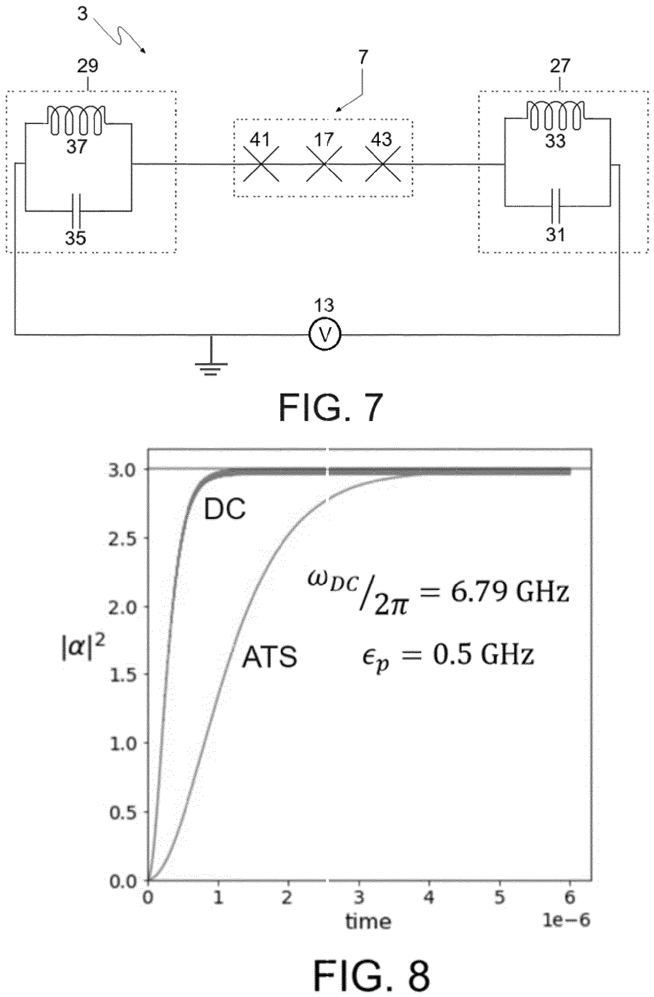

Thus, figure 7 shows an electrical equivalent diagram of an embodiment of the quantum system 1 similar to that of figure 4 except that the non-linear element 7 comprises three Josephson junctions, i.e. the Josephson junction 17 - the only one present in figure 4 - as well as two additional Josephson junctions 41 and 43.

In such a case, the value $V_{DC}$ of the DC voltage delivered by the DC voltage source 13 must be increased since the potential difference generated by the DC voltage source 13 is distributed between the three Josephson junctions 17, 41 et 43. In the present case, the value $V_{DC}$ is such that:

$$V_{DC} = 3 \times |2f_a - f_b| \frac{h}{2e}$$

More generally, in the case where the non-linear element 7 includes N Josephson junctions, where N is a strictly positive natural number, the value $V_{DC}$ of the DC voltage in order to induce a microwave oscillation having a frequency substantially equal to $|2f_a - f_b|$ in the non-linear superconducting quantum circuit 3 is the following:

$$V_{DC} = N|2f_a - f_b| \frac{h}{2e}$$

Figure 8 illustrates a theoretical comparison between the prior art quantum system 101 and the proposed quantum system 1 with regard to the dissipation of photons over time. The lower curve (ATS) corresponds to parametric dissipative stabilization while the upper curve (DC) corresponds to DC cat qubit stabilization.

The lower curve is obtained for an amplitude $\varepsilon_p = 0.5$ GHz for the parametric pump while the upper curve is obtained for an angular frequency $\omega_{DC}$ such that $\omega_{DC}/2\pi = 6.79$ GHz for the DC voltage source 13.

More particularly, the comparison was implemented with the following parameters:

- $$E_J/h = 0.6607 \text{ GHz},$$

- $$\omega_a/2\pi = 2.48 \text{ GHz},$$

- $$\omega_b/2\pi = 11.75 \text{ GHz},$$

- $$\varphi_a = 0.31,$$

- $$\varphi_b = 0.63,$$

and

$$\epsilon_d = 0.03 \text{ GHz.}$$

It appears that the DC cat qubit stabilization converges more quickly towards the asymptotic limit $|\alpha|^2 = 3$.

E.4. Injection locking

In the respective embodiments of figures 4, 5 and 7, the DC voltage source 13 is considered as an ideal DC voltage source. However, in the following, it is now considered that the DC voltage source 13 is not an ideal DC voltage source. In such a case, it is well known to the skilled person that the DC voltage source 13 is accompanied by non-trivial DC voltage noise. Such a charge DC noise can be expressed as a noise voltage $\delta V_N(t)$:

$$V_{DC} = \frac{\hbar}{2e} \omega_{DC} + \delta V_N(t)$$

Consequently, the differential equation of the phase $\varphi_J$ of the Josephson junction 17 must now be expressed as follows:

$$\dot{\varphi}_J = \omega_{DC} + \dot{\varphi}_a + \dot{\varphi}_b + \delta V_N(t)$$

Then:

$$\varphi_J = \omega_{DC} t + \varphi_a + \varphi_b + \int \delta V_N(t) \mathrm{dt}$$

The phase $\varphi_J$ of the Josephson junction 17 can be rewritten as follows:

$$\varphi_J = \omega_{DC} t + \varphi_a + \varphi_b + \varphi_N(t)$$

with:

$$\varphi_N(t) = \int \delta V_N(t) \mathrm{dt}$$

Consequently, the two-photon rate $g_2$ also depends on the DC voltage noise:

$$g_2 = \frac{E_J}{4} e^{i\varphi_N(t)} \varphi_a^2 \varphi_b$$

The noise term $e^{i\varphi_N(t)}$ reflects that the DC voltage noise induces a time-drifting angle on the first mode a:

$$\mathrm{Arg}(\alpha^2) = 2\theta_a + \varphi_N(t)$$

with:

$$\alpha^2 = -\frac{\epsilon_d}{g_2^*}$$

This drifting phase angle may be tracked and calibrated for via a feedback mechanism.

Additionally or alternatively, in order to overcome this problem, it is possible to implement injection locking to stabilize the phase $\varphi_J$ of the Josephson junction 17.

As explained previously, the DC voltage source 13 applied to the Josephson junction 17 can be considered as an oscillator since the DC voltage $V_{DC}$ delivered by the DC voltage source 13 is converted into angular frequency $\omega_{DC}$ in the microwave environment set-up by the Josephson junction 17. Since the DC voltage $V_{DC}$ delivered by the DC voltage source 13 is disturbed, it is the same for the angular frequency $\omega_{DC}$ of the induced microwave oscillation. Injection locking consists of disturbing a first oscillator with a second oscillator operating at a frequency arbitrarily close to that of the first oscillator; strong coupling allows the second oscillator to capture the first oscillator and cause it to have an identical frequency.

As illustrated in figures 2 and 3, the command circuit 5 further includes a microwave source 15. The principle is to use an external signal to lock the phase $\varphi_J$ of the Josephson junction 17. In other words, the DC voltage source 13 plays the role of the first oscillator while the microwave source 15 plays the role of the second oscillator. The microwave source 15 thus delivers microwave radiation at an angular frequency $\omega_L$, where $f_L = {\omega_L}/{2\pi}$ is the frequency of the microwave source 15. Such microwave radiations can be considered as "injection signal".

Figure 9 shows how injection locking can be implemented with the microwave source 15 and a resistive element 45 which are both coupled to the DC voltage source 13. In the example of figure 9, injection locking is incorporated into the galvanic circuit of figure 4. The resistive element 45, the DC voltage source 13 and the microwave source 15 are connected in series.

The presence of the resistive element 45 and the injection signal at angular frequency $\omega_L$ of the microwave source 15 induce the following equation of the phase $\varphi_J$ of the Josephson junction 17:

$$\varphi_J(t) = \omega_{DC}t + \varphi_{J_0} - \nu_0 \sin(\varphi_J) + \epsilon_L \cos(\omega_L t)$$

where: - $\varphi_{J_0}$ is the initial value of the phase through the Josephson junction,

- $\nu_0 = \dfrac{2e}{\hbar} I_J R_0$ , where $I_J$ is the critical current of the Josephson junction 17 and $R_0$ is the resistance of the added resistive element 45 such that $\nu_0$ is the phase contribution of the resistive element 45, and

- $\varepsilon_L$ is the amplitude of the microwave source 15.

As will be appreciated, the resistive element 45 enables, in combination with the DC voltage delivered by the DC voltage source 13 and the injection signal generated by the microwave source 15, low-frequency oscillations to access the nonlinear regime.

In the context of the present invention, the Applicant has recognized the existence of phase-locked regions for any value of the amplitude $\varepsilon_L$ of the injection signal, i.e. angular frequency ranges around $\omega_{DC}$ in which the angular frequency $\omega_J$ of the Josephson junction 17 is substantially equal to the angular frequency $\omega_L$ of the injection signal. Such phase-locked regions take the form of so-called Arnold tongues. To this end, the so-called detuning $\nu = |\omega_{DC} - \omega_L|$ preferably verifies the following criterion:

$$\nu < \frac{\epsilon_L \nu_0}{2}$$

Equivalently, the previous criterion can be written as follows with the frequencies $f_{DC}$ and $f_L$ instead of the respective angular frequencies $\omega_{DC}$ and $\omega_L$:

$$|f_{DC} - f_L| < \frac{\epsilon_L \nu_0}{4\pi}$$

For instance, figure 10 shows the evolution of the difference between the angular frequency $\omega_J$ of the Josephson junction 17 and the angular frequency $\omega_L$ of the injection signal as a function of the detuning $\nu$ for a value of the amplitude $\varepsilon_L$ of the injection signal equal to 0.35 gigahertz (GHz). More specifically, figure 10 shows the evolution of $\dfrac{\omega_J - \omega_L}{2\pi} = f_J - f_L$ as a function of $\dfrac{\nu}{2\pi} = |f_{DC} - f_L|$ .

To be more complete, the curve of figure 10 was obtained under the following conditions and by varying the angular frequency $\omega_{DC}$ of the induced microwave oscillation:

$$\omega_a/2\pi = 2.17 \text{ GHz},$$

$$\omega_b/2\pi = 11.37 \text{ GHz},$$

$$\omega_L/2\pi = 7.04 \text{ GHz},$$

$$\varphi_a = 0.29,$$

$$\varphi_b = 0.62,$$

$$E_J/h = 4 \text{ GHz},$$

$$R_0 = 50 \ \Omega,$$

$$\epsilon_L = 0.35 \text{ GHz},$$

$$\epsilon_d = 0.05 \text{ GHz},$$

$$\nu_{noise}/2\pi = 5 \text{ MHz, and}$$

$$V_{noise} = 10.36 \text{ nV.}$$

where: $\frac{\nu_{noise}}{2\pi}$ is the maximum frequency noise of the DC voltage source 13 that can be locked using injection locking, and $V_{noise}$ is the equivalent maximum voltage noise amplitude that can be locked.

It must be noted that the curve of figure 10 can also be obtained equivalently by varying the angular frequency $\omega_L$ of the injection signal instead of the angular frequency $\omega_{DC}$ of the induced microwave oscillation since the principle is to vary the detuning v. In such a case, the condition above $\omega_L/2\pi = 7.04$ GHz is replaced with $\omega_{DC}/2\pi = 7.04$ GHz.

It appears that, where $\frac{v}{2\pi}$ is between -0.005 GHz and 0.005 GHz, the quantity $\frac{\omega_J - \omega_L}{2\pi}$ is substantially equal to 0 GHz. In other words, where the frequency $f_L$ of the injection signal is comprised in the range $[f_{DC} - 0.005; f_{DC} + 0.005]$, the angular frequency $\omega_J$ of the Josephson junction 17 is substantially equal to the angular frequency $\omega_L$ of the injection signal. Preferably, the angular frequency of the injection signal is equal to the angular frequency induced by the DC voltage source, $\omega_L = \omega_{DC}$.

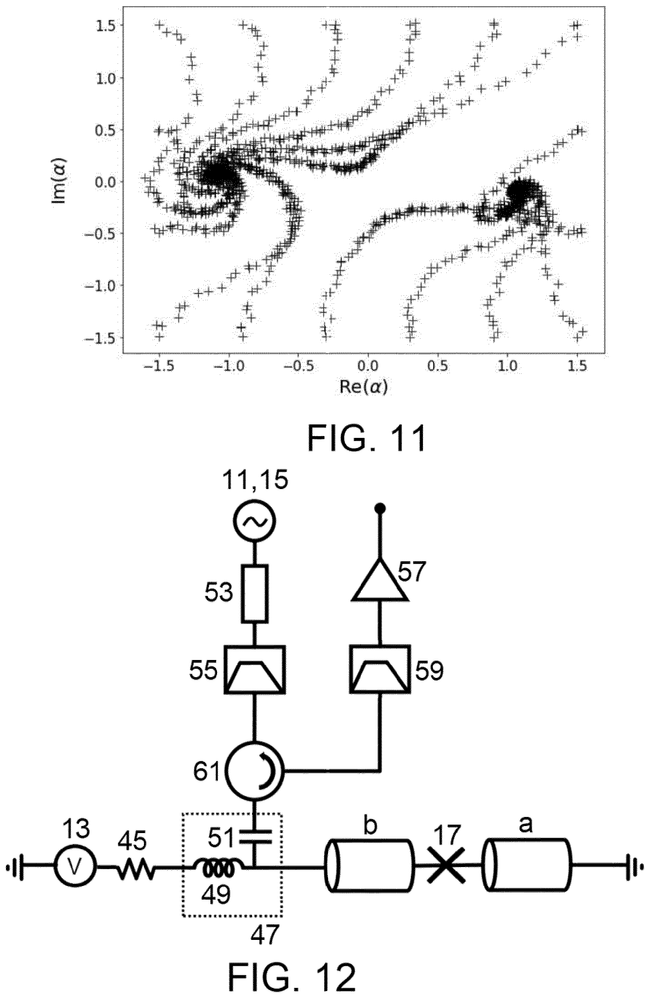

Figure 11 illustrates the stabilization of the phase of the cat qubit obtained thanks to injection locking.

Such stabilization was obtained under conditions similar to those of figure 10, i.e. with the same values for the parameters listed above, and with: $\omega_L/2\pi \approx \omega_{DC}/2\pi = 7.04$ GHz.

This figure shows, in the rotating frame at the frequency memory, semi-classical solutions to the equations of motion of the system showing that with injection locking, two opposite solutions, each taking a spiral shape, are stabilized. As will be appreciated by the skilled person, this is the classical equivalent of a cat state and exemplifies that two photon dissipation to stabilize a cat qubit still works with the injection locking. Without injection locking the steady state would drift in phase in the known reference frame.

Finally, figure 12 illustrates an experimental circuit for realizing the quantum system 1.

This experimental circuit includes the first mode a and the second mode b coupled by only one Josephson junction 17. In addition, the microwave source 11 is arranged to deliver microwave radiation at a frequency substantially equal to the second resonant frequency $f_b$ to drive the second mode b; and the DC voltage source 13 is arranged to bias the Josephson junction 17 to implement the non-linear conversion between two photons of the first mode a and one photon of the second mode b.

The DC voltage source 13 is coupled to the resistive element 45 for the purpose of implementing injection locking. To this end, the experimental circuit further includes the microwave source 15.

It must be noted that, in the experimental circuit, the resistive element 45 is off-chip, i.e. is not part of the non-linear superconducting quantum circuit 3. Here, the resistive element 45 is part of the command circuit 5.

However, alternatively, the resistive element 45 can be incorporated within the superconducting quantum circuit 3, and more particularly in the non-linear element 7, in the first resonant portion 27 or in the second resonant portion 29. In such a case, the resistive element 45 is on-chip.

Still in reference to figure 12, the experimental circuit further includes a bias-tee 47 which is a diplexer, and thus allows two ports - the AC and DC signals respectively delivered by the DC voltage source 13 and the microwave source 11 or the microwave source 15. Here, the bias-tee 47 includes an inductive element 49 and a capacitive element 51.

The experimental circuit also includes an attenuator 53 for selectively attenuating signals delivered by the microwave source 11 or the microwave source 15, and a high-frequency (HF) filter 55 arranged to filter signals that do not belong to the desired frequency band. The HF filter 55 may for instance correspond to the microwave filter 25 in figure 3. In addition, a high-frequency-mobility transistor (HEMT) 57 is arranged to amplify the signal for the purpose of readout, and a HF filter 59 is coupled to the HEMT 57. Finally, a circulator 61 is arranged to enable unidirectional signal flow, and thus prevents the entering signal to "bounce" back.

As will be appreciated, a DC filter can be added to the experimental circuit in order to filter parasitic high frequency noise originating from the DC voltage source 13. A voltage divider can also be used to divide the input voltage and thus reduces the input voltage noise.

The bias-tee 47 is a diplexer, which enables two input ports or lines carrying signals to be multiplexed into a third line without the signals carried by the two input lines interfering with each other. Namely the DC signal from the DC voltage source 13 and the AC signal from the microwave source 11 or the microwave source 15 are multiplexed into a single output line of the bias-tee 47.

## Claims

1. A quantum system (1) for stabilizing a cat qubit comprising:

   - a command circuit (5) including a microwave source (11) for delivering microwave radiation and a DC voltage source (13) for delivering DC voltage, and
   - a non-linear superconducting quantum circuit (3) including a non-linear element (7), said non-linear element (7) including at least one Josephson junction (17, 41, 43), and an assembly (9) comprising at least a first resonant portion (27) having a first mode (a) with a first resonant frequency and a second resonant portion (29) having a second mode (b) with a second resonant frequency, said non-linear element (7) being coupled via a linear coupler (19) to the assembly (9),

wherein the non-linear superconducting quantum circuit (3) is configured to stabilize a two-dimensional manifold hosting said cat qubit when:

• the microwave source (11) is configured to deliver microwave radiation at a frequency substantially equal to the second resonant frequency to the second resonant portion (29) to drive the second mode (b), and
• the DC voltage source (13) is configured to deliver DC voltage to bias the non-linear element (7), with the delivered DC voltage having a value inducing a microwave oscillation having a frequency substantially equal to an absolute value of a difference between twice the first resonant frequency and the second resonant frequency in the non-linear superconducting quantum circuit (3).

2. The quantum system (1) of claim 1, wherein the DC voltage source (13) is an ideal DC voltage source (13).

3. The quantum system (1) of claim 1, comprising a resistive element (45) coupled to said DC voltage source (13), and wherein the command circuit (5) comprises an additional microwave source (15) arranged to deliver to the DC voltage source (13) microwave radiation at a frequency derived from the frequency of the microwave oscillation induced by the DC voltage source (13) to cause injection locking thereof, wherein said resistive element (45) is incorporated within the non-linear superconducting quantum circuit (3) or within the command circuit (5).

4. The quantum system (1) of claim 3, wherein the additional microwave source (15) is arranged to deliver microwave radiation at a frequency $f_L$ satisfying the condition $|f_{DC} - f_L| < \frac{\epsilon_L \nu_0}{4\pi}$ , where $f_{DC}$ is the frequency of the microwave oscillation induced by the DC voltage source (13), $\varepsilon_L$ results from the amplitude and phase of the additional microwave source (15) and $\nu_0 = \frac{2e}{\hbar} I_J R_0$ , where $I_J$ is a critical current of the at least one Josephson junction (17, 41, 43), $R_0$ is the resistance of the resistive element (45), $\hbar$ is the reduced Planck constant and e is the elementary charge.

5. The quantum system (1) of one of the preceding claims, wherein the non-linear element (7) includes only one Josephson junction (17), and wherein the DC voltage source (13) is arranged to deliver DC voltage having a value $V_{DC}$ verifying $V_{DC} = |2f_a - f_b| \frac{h}{2e}$ , where $f_a$ and $f_b$ are respectively the first and second resonant frequencies, h is the Planck constant and e is the elementary charge.

6. The quantum system (1) of one of claims 1 to 4, wherein the non-linear element (7) includes a plurality of Josephson junctions (17, 41, 43), and wherein the DC voltage source (13) is arranged to deliver DC voltage having a value $V_{DC}$ verifying $V_{DC} = N|2f_a - f_b| \frac{h}{2e}$ , where $N$ is the number of Josephson junctions (17, 41, 43) of said plurality of Josephson junctions (17, 41, 43), $f_a$ and $f_b$ are respectively the first and second resonant frequencies, $h$ is the Planck constant and e is the elementary charge.

7. The quantum system (1) of any one of the preceding claims, wherein the non-linear element (7) is galvanically coupled to the first resonant portion (27).

8. The quantum system (1) of one of claims 1 to 6, wherein the non-linear element (7) is capacitively coupled to the first resonant portion (27).

9. The quantum system (1) of one of the preceding claims, wherein the non-linear element (7) is galvanically coupled to the second resonant portion (29).

10. The quantum system (1) of one of claims 1 to 8, wherein the non-linear element (7) is capacitively coupled to the second resonant portion (29).

11. A method for stabilizing a cat qubit implemented by the quantum system (1) of one of the preceding claims and comprising the following operations:

- delivering, by the microwave source (11), microwave radiation at a frequency substantially equal to the second resonant frequency to the second resonant portion (29) to drive the second mode (b), and
- delivering, by the DC voltage source (13), DC voltage to bias the non-linear element (7), with the delivered DC voltage having a value inducing a microwave oscillation having a frequency substantially equal to the absolute value of the difference between twice the first resonant frequency and the second resonant frequency in the non-linear superconducting quantum circuit (3).

**Patentansprüche**

1. Quantensystem (1) zum Stabilisieren eines Cat-Qubits, umfassend:

- eine Steuerschaltung (5), die eine Mikrowellenquelle (11) zum Abgeben von Mikrowellenstrahlung und eine Gleichspannungsquelle (13) zum Abgeben von Gleichspannung beinhaltet, und
- eine nichtlineare supraleitende Quantenschaltung (3), die ein nichtlineares Element (7) beinhaltet, wobei das nichtlineare Element (7) mindestens einen Josephson-Kontakt (17, 41, 43) beinhaltet, und eine Anordnung (9), die mindestens einen ersten Resonanzabschnitt (27), der einen ersten Modus (a) mit einer ersten Resonanzfrequenz aufweist, und einen zweiten Resonanzabschnitt (29) umfasst, der einen zweiten Modus (b) mit einer zweiten Resonanzfrequenz aufweist, wobei das nichtlineare Element (7) über einen linearen Koppler (19) mit der Anordnung (9) gekoppelt ist,

wobei die nichtlineare supraleitende Quantenschaltung (3) dazu konfiguriert ist, eine zweidimensionale Mannigfaltigkeit, die das Cat-Qubit trägt, zu stabilisieren, wenn:

- die Mikrowellenquelle (11) dazu konfiguriert ist, Mikrowellenstrahlung mit einer Frequenz, die im Wesentlichen gleich der zweiten Resonanzfrequenz ist, an den zweiten Resonanzabschnitt (29) abzugeben, um den zweiten Modus (b) anzuregen, und
- die Gleichspannungsquelle (13) dazu konfiguriert ist, eine Gleichspannung zum Vorspannen des nichtlinearen Elements (7) abzugeben, wobei die abgegebene Gleichspannung einen Wert aufweist, der eine Mikrowellenoszillation induziert, die eine Frequenz aufweist, die im Wesentlichen gleich einem Absolutwert einer Differenz zwischen dem Zweifachen der ersten Resonanzfrequenz und der zweiten Resonanzfrequenz in der nichtlinearen supraleitenden Quantenschaltung (3) ist.

2. Quantensystem (1) nach Anspruch 1, wobei die Gleichspannungsquelle (13) eine ideale Gleichspannungsquelle (13) ist.

3. Quantensystem (1) nach Anspruch 1, die ein Widerstandselement (45), umfasst, das an die Gleichspannungsquelle (13) gekoppelt ist, und wobei die Steuerschaltung (5) eine zusätzliche Mikrowellenquelle (15) umfasst, die dazu eingerichtet ist, an die Gleichspannungsquelle (13) Mikrowellenstrahlung mit einer Frequenz abzugeben, die von der Frequenz der durch die Gleichspannungsquelle (13) induzierten Mikrowellenoszillation abgeleitet ist, um deren Injection-Locking zu bewirken, wobei das Widerstandselement (45) in die nichtlineare supraleitende Quantenschaltung (3) oder in die Steuerschaltung (5) integriert ist.

4. Quantensystem (1) nach Anspruch 3, wobei die zusätzliche Mikrowellenquelle (15) dazu eingerichtet ist, Mikrowellenstrahlung mit einer Frequenz $f_L$ abzugeben, die die Bedingung $|f_{DC} - f_L| < \frac{\epsilon_L v_0}{4\pi}$ erfüllt, wobei $f_{DC}$ die Frequenz der durch die Gleichspannungsquelle (13) induzierten Mikrowellenoszillation ist, sich $\varepsilon_L$ aus der Amplitude und Phase der zusätzlichen Mikrowellenquelle (15) und $v_0 = \frac{2e}{\hbar} I_J R_0$ ergibt, wobei $I_j$ ein kritischer Strom des mindestens einen Josephson-Kontakts (17, 41, 43) ist, $R_0$ der Widerstand des Widerstandselements (45) ist, $\hbar$ die reduzierte Planck-Konstante ist und $e$ die Elementarladung ist.

5. Quantensystem (1) nach einem der vorstehenden Ansprüche, wobei das nichtlineare Element (7) nur einen Josephson-Kontakt (17) beinhaltet und wobei die Gleichspannungsquelle (13) dazu eingerichtet ist, eine Gleichspannung abzugeben, die einen Wert $V_{DC}$ aufweist, der $V_{DC} = |2f_a - f_b| \frac{h}{2e}$ erfüllt, wobei $f_a$ und $f_b$ die erste bzw.

die zweite Resonanzfrequenz sind, h die Planck-Konstante ist und e die Elementarladung ist.

6. Quantensystem (1) nach einem der Ansprüche 1 bis 4, wobei das nichtlineare Element (7) eine Vielzahl von Josephson-Kontakten (17, 41, 43) beinhaltet und wobei die Gleichspannungsquelle (13) dazu eingerichtet ist, eine Gleichspannung abzugeben, die einen Wert $V_{DC}$ aufweist, der $V_{DC} = N|2f_a - f_b|\frac{h}{2e}$ erfüllt, wobei $N$ die Anzahl von Josephson-Kontakten (17, 41, 43) der Vielzahl von Josephson-Kontakten (17, 41, 43) ist, $f_a$ und $f_b$ die erste bzw. zweite Resonanzfrequenz sind, $h$ die Planck-Konstante ist und e die Elementarladung ist.

7. Quantensystem (1) nach einem der vorstehenden Ansprüche, wobei das nichtlineare Element (7) galvanisch an den ersten Resonanzabschnitt (27) gekoppelt ist.

8. Quantensystem (1) nach einem der Ansprüche 1 bis 6, wobei das nichtlineare Element (7) kapazitiv an den ersten Resonanzabschnitt (27) gekoppelt ist.

9. Quantensystem (1) nach einem der vorstehenden Ansprüche, wobei das nichtlineare Element (7) galvanisch an den zweiten Resonanzabschnitt (29) gekoppelt ist.

10. Quantensystem (1) nach einem der Ansprüche 1 bis 8, wobei das nichtlineare Element (7) kapazitiv an den zweiten Resonanzabschnitt (29) gekoppelt ist.

11. Verfahren zum Stabilisieren eines Cat-Qubits, das durch das Quantensystem (1) eines der vorstehenden Ansprüche realisiert wird und die folgenden Operationen umfasst:

- Abgeben, durch die Mikrowellenquelle (11), von Mikrowellenstrahlung mit einer Frequenz, die im Wesentlichen gleich der zweiten Resonanzfrequenz ist, an den zweiten Resonanzabschnitt (29), um den zweiten Modus (b) anzuregen, und
- Abgeben, durch die Gleichspannungsquelle (13), von Gleichspannung zum Vorspannen des nichtlinearen Elements (7), wobei die abgegebene Gleichspannung einen Wert aufweist, der eine Mikrowellenoszillationen induziert, die eine Frequenz aufweist, die im Wesentlichen gleich dem Absolutwert der Differenz zwischen dem Zweifachen der ersten Resonanzfrequenz und der zweiten Resonanzfrequenz in der nichtlinearen supraleitenden Quantenschaltung (3) ist.

## Revendications

1. Système quantique (1) destiné à stabiliser un qubit de chat comprenant :

- un circuit de commande (5) incluant une source de micro-ondes (11) permettant de fournir un rayonnement micro-ondes et une source de tension continue (13) permettant de fournir une tension continue, et
- un circuit quantique supraconducteur non linéaire (3) incluant un élément non linéaire (7), ledit élément non linéaire (7) incluant au moins une jonction Josephson (17, 41, 43), et un ensemble (9) comprenant au moins une première partie résonante (27) présentant un premier mode (a) avec une première fréquence de résonance et une seconde partie résonante (29) présentant un second mode (b) avec une seconde fréquence de résonance, ledit élément non linéaire (7) étant couplé via un coupleur linéaire (19) à l'ensemble (9),

dans lequel le circuit quantique supraconducteur non linéaire (3) est configuré pour stabiliser une variété bidimensionnelle hébergeant ledit qubit de chat lorsque :

- la source de micro-ondes (11) est configurée pour délivrer un rayonnement micro-ondes à une fréquence sensiblement égale à la seconde fréquence de résonance à la seconde partie résonante (29) pour entraîner le second mode (b), et
- la source de tension continue (13) est configurée pour délivrer une tension continue afin de polariser l'élément non linéaire (7), la tension continue délivrée présentant une valeur induisant une oscillation de micro-ondes présentant une fréquence sensiblement égale à la valeur absolue de la différence entre le double de la première fréquence de résonance et la seconde fréquence de résonance dans le circuit quantique supraconducteur non linéaire (3).

2. Système quantique (1) selon la revendication 1, dans lequel la source de tension continue (13) est une source de tension continue (13) idéale.

3. Système quantique (1) selon la revendication 1, comprenant un élément résistif (45) couplé à ladite source de tension continue (13), et dans lequel le circuit de commande (5) comprend une source de micro-ondes supplémentaire (15) agencée de manière à délivrer à la source de tension continue (13) un rayonnement micro-ondes à une fréquence dérivée de la fréquence de l'oscillation de micro-ondes induite par la source de tension continue (13) afin de provoquer un verrouillage par injection de celle-ci, dans lequel ledit élément résistif (45) est incorporé dans le circuit quantique supraconducteur non linéaire (3) ou dans le circuit de commande (5).

4. Système quantique (1) selon la revendication 3, dans lequel la source de micro-ondes supplémentaire (15) est agencée de manière à délivrer un rayonnement micro-ondes à une fréquence $f_L$ satisfaisant la condition $|f_{DC} - f_L| < \frac{\epsilon_L v_0}{4\pi}$, où $f_{DC}$ est la fréquence de l'oscillation de micro-ondes induite par la source de tension continue (13), $\varepsilon_L$ provient de l'amplitude et de la phase de la source de micro-ondes supplémentaire (15) et $v_0 = \frac{2e}{\hbar} I_J R_0$, où $I_j$ est un courant critique de la au moins une jonction Josephson, (17,41,43), $R_0$ est la résistance de l'élément résistif (45), $\hbar$ est la constante de Planck réduite et e est la charge élémentaire.

5. Système quantique (1) selon l'une des revendications précédentes, dans lequel l'élément non linéaire (7) n'inclut qu'une seule jonction Josephson (17), et dans lequel la source de tension continue (13) est agencée de manière à délivrer une tension continue présentant une valeur $V_{DC}$ vérifiant $V_{DC} = |2f_a - f_b| \frac{h}{2e}$, où $f_a$ et $f_b$ sont, respectivement, les première et seconde fréquences de résonance, h est la constante de Planck et e est la charge élémentaire.

6. Système quantique (1) selon l'une des revendications 1 à 4, dans lequel l'élément non linéaire (7) inclut une pluralité de jonctions Josephson (17, 41, 43), et dans lequel la source de tension continue (13) est agencée de manière à délivrer une tension continue présentant une valeur $V_{DC}$ vérifiant $V_{DC} = N|2f_a - f_b| \frac{h}{2e}$, où $N$ est le nombre de jonctions Josephson (17, 41, 43) de ladite pluralité de jonctions Josephson (17, 41, 43), $f_a$ et $f_b$ sont, respectivement, les première et seconde fréquences de résonance, $h$ est la constante de Planck et e est la charge élémentaire.

7. Système quantique (1) selon l'une quelconque des revendications précédentes, dans lequel l'élément non linéaire (7) est couplé galvaniquement à la première partie résonante (27).

8. Système quantique (1) selon l'une des revendications 1 à 6, dans lequel l'élément non linéaire (7) est couplé capacitivement à la première partie résonante (27).

9. Système quantique (1) selon l'une des revendications précédentes, dans lequel l'élément non linéaire (7) est couplé galvaniquement à la seconde partie résonante (29).

10. Système quantique (1) selon l'une des revendications 1 à 8, dans lequel l'élément non linéaire (7) est couplé capacitivement à la seconde partie résonante (29).

11. Procédé de stabilisation d'un qubit de chat implémenté par le système quantique (1) selon l'une des revendications précédentes et comprenant les opérations suivantes :

    - la délivrance, par la source de micro-ondes (11), d'un rayonnement micro-ondes à une fréquence sensiblement égale à la seconde fréquence de résonance à la seconde partie résonante (29) pour entraîner le second mode (b), et
    - la fourniture, par la source de tension continue (13), d'une tension continue afin de polariser l'élément non linéaire (7), la tension continue délivrée présentant une valeur induisant une oscillation de micro-ondes présentant une fréquence sensiblement égale à la valeur absolue de la différence entre le double de la première fréquence de résonance et la seconde fréquence de résonance dans le circuit quantique supraconducteur non linéaire (3).

FIG. 1
(Prior art)

FIG. 2

FIG. 3

FIG. 4

...

FIG. 5

FIG. 6

FIG. 7

$$\omega_{DC}/2\pi = 6.79 \text{ GHz}$$

$$\epsilon_p = 0.5 \text{ GHz}$$

FIG. 8

FIG. 9

$$\epsilon_L = 0.35 \text{ (GHz)}$$

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147

- EP 21306965

**Non-patent literature cited in the description**

- **R. LESCANNE et al.** Exponential suppression of bit-flips in a qubit encoded in an oscillator. *Nature Physics*, 2020
- **PEUGEOT et al.** Generating two continuous entangled microwave beams using a dc-biased Josephson junction. *arXiv:2010.03376v1*, 2020
- **WOOD et al.** Josephson photonics with simultaneous resonances. *arXiv:2106.15243v2*, 2021

- **MA et al.** Photon-pair blockade in a Josephson-photonics circuit with two nondegenerate microwave resonators. *New Journal of Physics*, 03 May 2022, vol. 24
- **MARQUET et al.** Autoparametric resonance extending the bit-flip time of a cat qubit up to 0.3 s. *arXiv:2307.06761v1*, 13 July 2023